# EUROPEAN PATENT SPECIFICATION

(11) **EP 1 935 675 B1**
(45) Date of publication and mention of the grant of the patent: **09.03.2011**
(21) Application number: 07076055.8
(22) Date of filing: 07.12.2007
(51) Int. Cl.: B60D 1/52

(54) **Coupling assembly with coupling head brake**
Kupplungsbaugruppe mit Kupplungskopfbremse
Ensemble de couplage doté d'un frein de tête de couplage

(30) Priority: 18.12.2006 NL 1033075
(43) Date of publication of application: 25.06.2008
(73) Proprietor: Thule Towing Systems B.V., 7951 CX Staphorst (NL)
(72) Inventor: Brom, Daniel Peter, 7951 CX Staphorst (NL); Eising, Frederik Jakob, 7951 CX Staphorst (NL); Margadant, Arnoud Philip Daan, 7951 CX Staphorst (NL)
(74) Representative: De Hoop, Eric

(56) References cited:
- EP-A- 0 934 838
- EP-A- 1 526 010
- DE-U1- 9 010 715
- DE-U1- 9 209 447

## Description

### BACKGROUND OF THE INVENTION

The invention relates to a coupling assembly for a vehicle, for instance a detachable tow hitch for a vehicle, according to the preamble of claim 1. Such assembly is known from EP 1.526.010 in the name of the applicant.

EP 1.526.010 discloses a detachable tow hitch comprising an insertion member that is accommodated in a tube member that is fixedly mounted to the rear side of the vehicle. The insertion member comprises two transverse pins that drop into bearings of the tube member, an engagement surface at the end that engages onto the tube member in order to retain the transverse pins in the bearings, and a pre-biassed locking pin that is axially slidable and has a wedge surface which opposite the engagement surface engages onto the tube member in order to retain the engagement surface in engagement. Said three-point suspension can be released by retracting the locking pin. The angle of the wedge surface to the axial slide direction in that case is selected such that the locking pin remains self-releasing.

Ever higher requirements are made on the known detachable tow hitches to make them suitable for increasingly heavier trailers. Ever higher requirements are particularly made on the resistance against negative tow ball pressure, which occurs when the towing vehicle brakes or drives over a speed ramp. In case of such a high load there is the theoretical possibility that the locking pin due to its self-releasability, becomes slightly detached counter the pre-bias, as a result of which play may arise in the three-point suspension. The user of the tow hitch could notice a play, for instance noticeable due to shocks in the vehicle. This may have a negative effect on driving comfort.

It is an object of the invention to provide a coupling assembly for a vehicle with which driving comfort can also be maintained in case of a high load on the said coupling assembly.

It is an object of the invention to provide a coupling assembly for a vehicle with which driving comfort can also be maintained when exerting a negative ball pressure in the coupled condition.

### SUMMARY OF THE INVENTION

The invention provides a coupling assembly for a vehicle, according to claim 1.

The coupling head is rotatably connected to the coupling rod, so that it is able to move independently from the coupling rod. As a result the part of the coupling head that is situated within the longitudinal bore is able to contact the wall sections of the longitudinal bore for on the basis of friction counteracting a reverse motion of the coupling head out of the locking position. The degree of movement with respect to the longitudinal bore may depend on an external force that is exerted on the coupling head when in the locking position. As a result the friction can increase at an increase of the external force, for instance during a negative ball pressure on the first coupling member.

In one embodiment the coupling head is rotatable with respect to the coupling rod about an axis of rotation transverse to the axial direction. Due to a sideward rotation transverse to the axial direction the coupling head is able to contact the opposite wall sections of the longitudinal bore, as a result of which a reverse motion out of the locking position at opposite sides of the coupling head can be counteracted.

In one embodiment the coupling assembly comprises a rotary hinge between the coupling rod and the coupling head. The coupling rod itself can then be confined without play in sideward direction in the longitudinal bore.

The coupling head is able to rotate about its own axis in order to contact one or several wall sections of the longitudinal bore when the rotary hinge has an axis of rotation situated within the coupling head.

In one embodiment the coupling rod has an end that is movably accommodated in the coupling head. The accommodation of the end in the coupling head can ensure a form-closed connection between the coupling head and the coupling rod, even when for instance said rotary hinge fails. The coupling position can then at least remain locked until the first coupling member is uncoupled from the second coupling member by the user.

In one embodiment the coupling head at a first longitudinal side comprises an abutment surface for in the locking position in abutment with the socket exerting a stopping force on the first and/or third coupling means. The abutment surface may be a wedge surface that is oriented inclined to the axial slide direction.

The stopping force on the abutment surface may contribute to increasing the stopping friction on the coupling head when the coupling head comprises a first braking surface at a second longitudinal side substantially opposite the first longitudinal side, which braking surface in the axial direction towards the coupling rod is offset with respect to the abutment surface, and a second braking surface at the first longitudinal side which in the axial direction towards the coupling rod is offset with respect to a leading end of the first braking surface, wherein the first braking surface and the second braking surface are positioned for in the locking position get into braking contact with the opposite side wall sections of the longitudinal bore. The first braking surface may define a tilting point for the coupling head, so that the coupling head is able to press the second braking surface in opposite direction with respect to the stop surface against the wall of the longitudinal bore like a lever.

The lever action on the first and second braking surfaces, and thus the contact forces exerted on the side wall sections, can remain limited in case of a large force on the abutment surface when in the axial direction the distance between the first braking surface and the second braking surface exceeds the distance between the first braking surface and the abutment surface.

In one embodiment the first braking surface in the axial direction is situated approximately in the middle of the coupling head.

At the location of the first braking surface a peak contact load can be exerted when the first braking surface is situated on a locally elevated section of the second longitudinal side. The elevated section can then be pressed in elastically.

When in contact with the wall of the longitudinal bore, the coupling head still has sufficient freedom of movement to increase the pressure on the wall when the first braking surface is situated on or adjacent to a transition from the second longitudinal side to a tapering end section of the coupling head.

In one embodiment the coupling head comprises a spring element adjacent to or at a short distance from the first braking surface, wherein the spring element in the locking position with a free end abuts the longitudinal bore in a pre-biassed manner. The pre-biassed spring element may in case of a lowering of the stopping force on the first abutment surface, for instance when uncoupling the first coupling member, move the second braking surface away again from the wall of the longitudinal bore, as a result of which the coupling head can be released again from its locking position.

The spring element can be pre-biassed with respect to the first braking surface by the tilting motion when the free end in unloaded condition of the spring element transverse to the axial direction projects above the first braking surface.

The stopping force on the abutment surface is substantially utilised first for pre-biassing the spring element when the free end of the spring element is positioned transverse to the axial direction substantially opposite the abutment surface.

In a simple embodiment the spring element is accommodated in a recess, preferably a blind hole, in the second longitudinal side.

In one embodiment the second braking surface is situated at a rear side of the coupling head that is situated near the coupling rod.

The movability of the coupling head and thus the coupling rod to move through the longitudinal bore can be enhanced when the coupling head at a rear side situated near the coupling rod is provided with a slide surface preferably extending radially around the coupling head.

In one embodiment the rear side defines the widest portion of the coupling head.

When in the locking position the slide surface is able to counteract a movement of the coupling head out of the coupling head when the second braking surface is defined on the slide surface.

A peak load exerted on the wall of the longitudinal bore at the location of the first and/or second braking surface can be distributed in axial direction over the first and/or second braking surface when the first and/or second braking surface has a convex shape in the axial direction.

In one embodiment the coupling head at the first longitudinal side comprises a third braking surface that is substantially straight in the axial direction and which in the locking position abuts the longitudinal bore while the second braking surface exerts a local peak pressure contact. The third braking surface is able to limit the local peak pressure contact exerted by the second braking surface to a peak pressure that is lower than the yield point of the wall of the longitudinal bore, as a result of which local plastic deformation can be counteracted.

Alternatively or additionally the coupling head at the second longitudinal side comprises a fourth braking surface that is substantially straight in the axial direction and which in the locking position abuts the longitudinal bore while the first braking surface exerts a local peak pressure contact.

The first coupling means can be pushed in the direction of the second coupling means to maintain the cooperation when the abutment surface in the locking position substantially faces away from the first coupling means.

The retaining force on the coupling head can be effected by wedge action when the abutment surface is oriented inclined to the axial direction of the coupling head.

Preferably the coupling assembly, particularly the coupling head is made of metal, preferably hardened steel.

The invention furthermore relates to a first coupling member intended and suitable for the coupling assembly according to the invention.

The invention furthermore relates to a vehicle provided with a coupling assembly according to the invention.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### SHORT DESCRIPTION OF THE DRAWINGS

The invention will be elucidated on the basis of a number of exemplary embodiments shown in the attached drawings, in which:
Figure 1 shows a view in perspective of a coupling assembly according to the invention, partially exploded;
Figures 2A and 2B show a schematic, partially cut-away cross-section, and a detail of the coupling assembly, respectively, in a first stage of coupling;
Figures 3A and 3B show a schematic, partially cut-away cross-section, and a detail of the coupling assembly, respectively, in coupled condition; and
Figures 4A, 4B and 4C, show a schematic overview, a schematic, partially cut-away cross-section, and a detail of the coupling assembly, respectively, when subjected to a negative load on the ball.

### DETAILED DESCRIPTION OF THE DRAWINGS

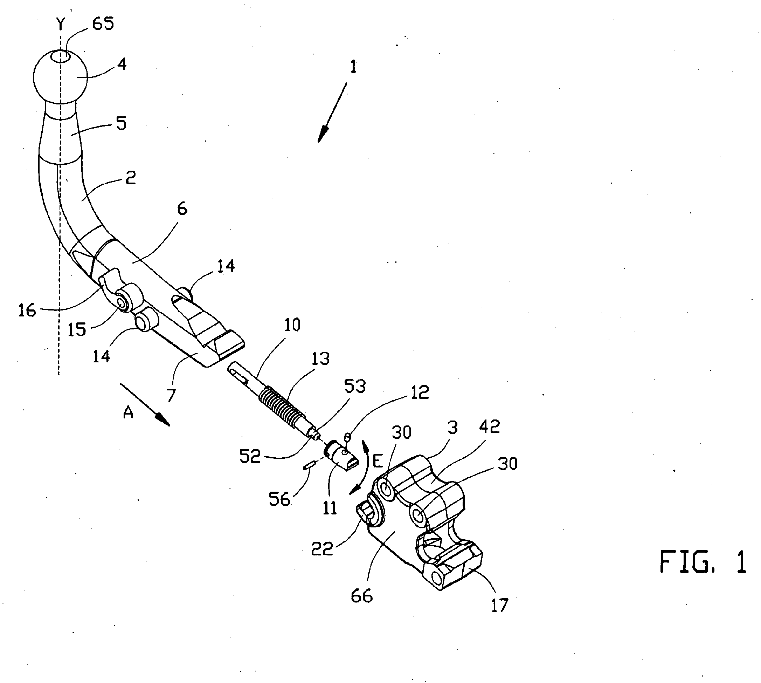

Figure 1 shows an exemplary embodiment of a coupling assembly 1 according to the invention, comprising a tow hitch member 2 and an accommodation member 3. The tow hitch member 2 comprises a ball 4, a neck 5, and a tow hitch rod 6 intended to be accommodated in the accommodation member 3.

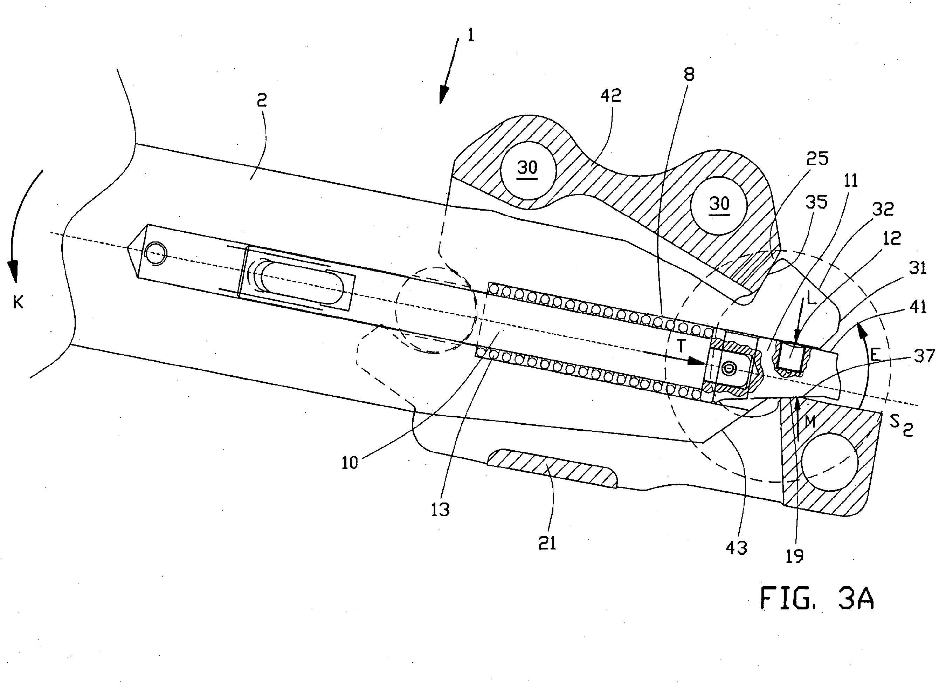

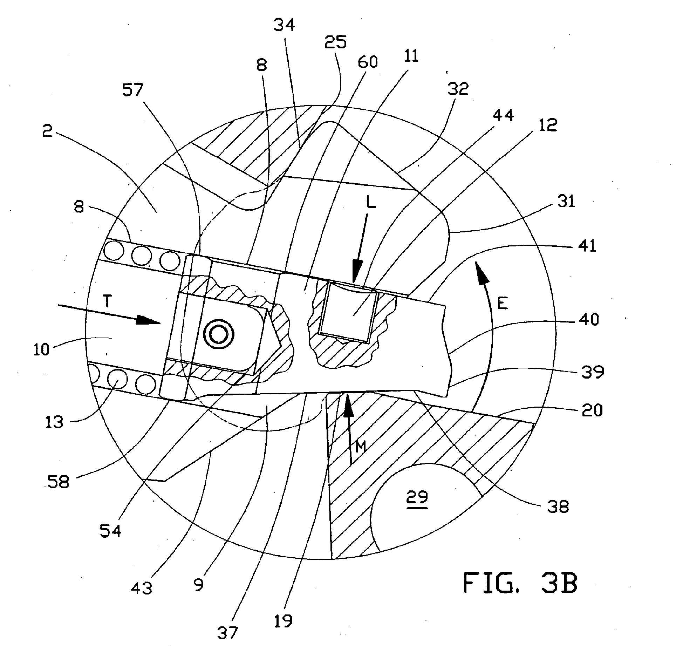

The accommodation member 3 forms a tubular accommodation space for accommodation of the insertion end 7 of the tow hitch rod 6. The accommodation member 3 is intended to be fixedly mounted to the rear side of a vehicle, just below or behind the rear bumper, such that it is concealed. The accommodation member 3 is then oriented such with respect to the vehicle that in the fully inserted and coupled condition, as shown in figures 3A and 3B, the centre line Y of the neck 5 behind the ball 4 is substantially vertical. In this position the flat upper surface 65 of the hitch ball 4 is substantially horizontally oriented.

Depending on the mounting space underneath a vehicle, the shown coupling assembly 1 can be used, or an alternative coupling assembly according to the invention, such that the accommodation member is fully concealed behind the bumper, and the length of the tow hitch rod and the angle of the bend are designed for in fully inserted and coupled condition vertically orienting the centre line Y of the neck. The tilting of the accommodation member with respect to the vehicle depends on the angle of the bend. In the example shown the tow hitch member 2 is inserted diagonally downward into the accommodation member 3 and the accommodation member 3 is tilted forward. In an alternative tow hitch member having a larger bend the accommodation member is horizontally oriented. Again alternatively the accommodation member is oriented diagonally upward or vertical. The tow hitch member then has to be inserted diagonally or vertically upward, respectively, in the direction of the bumper.

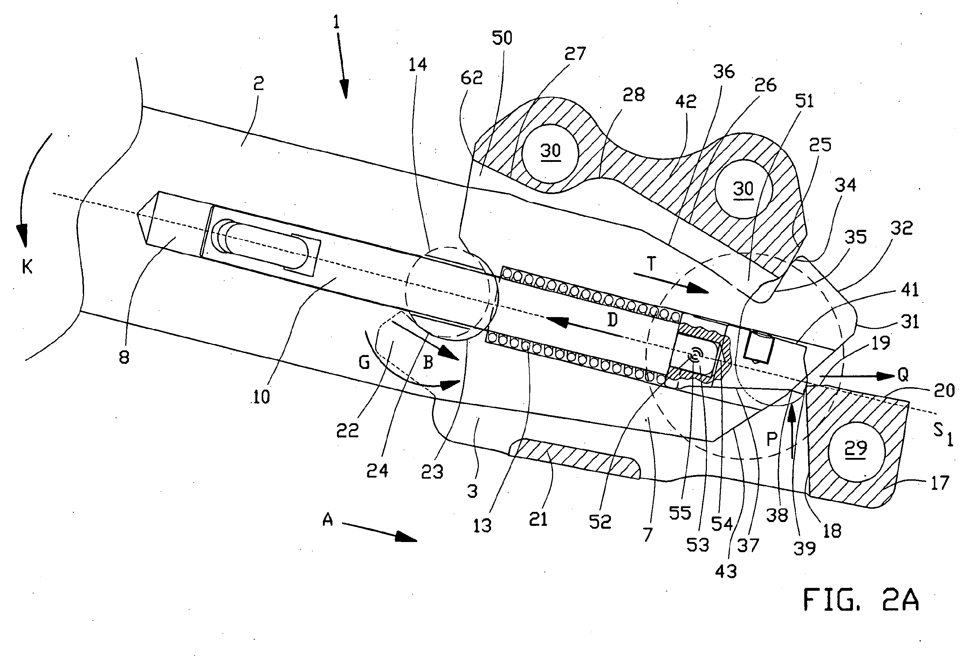

Figures 2A-4C show a cross-section of the accommodation member 3 with cut-away in there the insertion end 7. For the sake of clarity of the figures only the cross-section of the accommodation member 3 is hatched.

The tow hitch member 2 is provided with a turning knob 15 having a hand engagement part 16 for moving a coupling rod 10 by rotation of the turning knob 15. The coupling rod 10 is accommodated in a stepped bore 8 through the insertion end 7 so as to be axially slidable along the centre line S of the insertion end 7 (S1-S3 in various orientations with respect to the accommodation member 3). The coupling rod 10 comprises a narrowed end section 53 with which the coupling rod 10 is connected to a locking head or coupling head 11. The end section 53 is then accommodation in a broad transverse bore 54 in the coupling head 11. The coupling head 11 comprises a transverse bore 55 in which a hinge pin 56 is accommodated. The hinge pin 56 extends through a broad bore 52 in the end section 53, through which the coupling head 11 can be hinged with play in direction E in a plane that is defined by the centre line Y and the centre line S.

The coupling head 11 projects from the end opening 9 of the bore 8, and is pre-biassed in the insertion direction A by means of a helical spring or compression spring 13 placed around the coupling rod 10 and in the bore 8. The compression spring 13 keeps the coupling head 11 oriented in the extension of the coupling rod 10 due to the pre-bias, as a result of which the free end of the coupling head 11 in external unloaded condition is spaced apart from the wall of the bore 8.

The coupling head 11 comprises a slide edge 57 that extends radially circumferential about the centre line S, which slide edge defines the widest rear side of the coupling head 11. The radial diameter of the coupling head 11 defined by the slide edge 57 is smaller than the outer diameter of the bore 8, as a result of which the coupling head 11 is able to move slidingly through the bore 8 under narrow tolerances. The coupling head 11 comprises a radially circumferential narrowing 59 behind the slide edge 57.

At its lower side the coupling head 11 is provided with an inclined run-on or coupling surface 37 (abutment surface), and contiguous thereto a locking surface 38 substantially parallel to the centre line S, subsequently a nose surface 39 that is at an angle of 90 degrees thereto and transverse to the centre line S, then an abutment surface 40 that is at an obtuse angle thereto, which surface with respect to the centre line S inclines rearward and upward or recedes, and a rearwardly and upwardly slightly sloping upper wall 41 (fourth braking surface). The transition from the upper wall 41 to the narrowing 59 defines a bevelled tilting edge 60 (first braking surface) that extends radially about the centre line S over the upper side of the coupling head 11. In a recess in the upper wall 41 a plastic spring element in the form of a nylon insert piece 12 having a convex upper side 44 is accommodated, for engagement on the wall of the bore 8. In the external unloaded condition of the coupling head 11 the convex upper side 44 projects from the upper wall 41 and abuts the wall of the bore 8.

The coupling head 11 is pre-biassed by the compression spring 13 towards a coupling position that is partially projecting out of the bore 8. This is prevented, however, by means of a trigger mechanism that is not further described yet known per se, at the location of the knob 15, which keeps the coupling head 11 in a retracted stand-by position, in which the coupling head 11 projects to a lesser extent out of the bore 8. Said trigger mechanism operates such that when, from the stand-by position, a force exceeding a certain threshold value is exerted on the coupling head 11 in a direction pressing the compression spring 13 together, the coupling rod 10 is released after having been pressed in over a certain distance, so that the compression spring 13 is able to push the coupling head 11 further to the outside, into the coupling position.

The insertion end 7 is furthermore provided with abutment pins 14 projecting sideward on both sides, which pins have a circle-cylindrical outer wall (second coupling means) of which the centre line extends through the centre line S of the tow hitch rod 6. At the front side, around the opening 9 of the bore 8, the insertion end 7 is provided with a pilot surface 43 that is oriented diagonally to the centre line S, which pilot surface at the upper side merges into a bevelling 31, consecutive thereto in upward direction a diagonally offset surface 32, an upper curve 33, consecutive thereto a short abutment surface 34 running diagonally rearward and downward, and via a slight buckle merging into a longer, steeper abutment surface 35 (first coupling means) declining downward and rearward, which together with a surface 36 that is substantially perpendicular thereto forms a recess 51 in the upper side of the insertion end 7.

As a reference for the orientation of the surfaces of the accommodation member 3 described below, the centre line S2 in case of a completed coupling as shown in figures 3A and 3B is used. The centre line S2 in this position equals the centre line of the accommodation member 3.

The accommodation member 3 is substantially tubular, albeit with interruptions in the bottom wall, for reasons of weight reduction. Thus a transverse part 21 is present at the lower side, which transverse part with upper wall 42 and side walls 66 of the accommodation member 3 defines an insertion opening 50 for the insertion end 7. At the lower side of the accommodation member 3, spaced apart in (forward) insertion direction A, a transverse beam 17 is provided, which is provided with a bore 29 for weight reduction.

The upper wall 42 is provided with two transverse through bores 30 for mounting the accommodation member 3 to the vehicle. At the lower side, starting at the front surface 62 that is situated along the insertion opening 50, the upper wall 42 is provided with a guide surface 27 that diagonally declines with respect to the centre line S2, subsequently with a concave/convex guide surface 28, and subsequently with a straight diagonally inclining guide surface 26. The upper wall 42 ends in a diagonally upwardly/forwardly extending abutment surface 25 (third coupling means) that is more or less perpendicular to the surface 26.

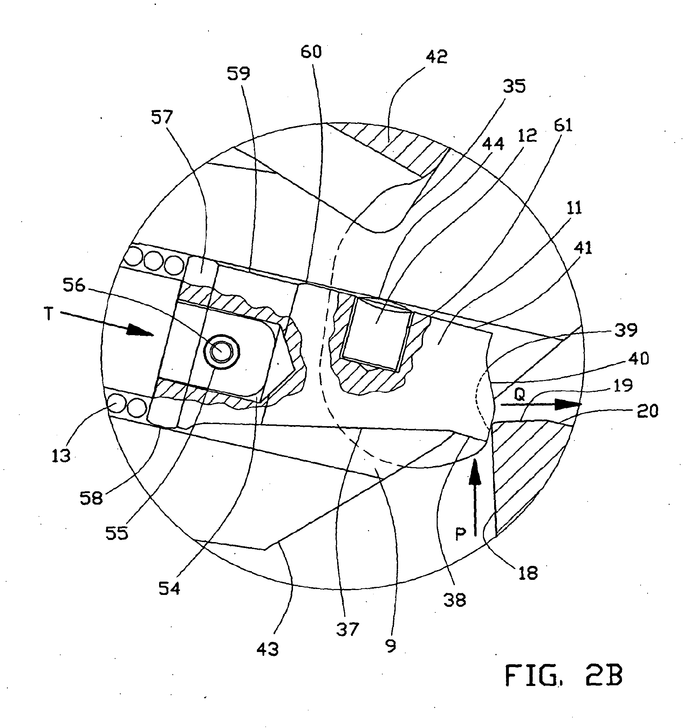

The transverse beam 17 comprises an abutment surface 18 that diagonally recedes with respect to the centre line S2, and which via an almost right angle merges into a coupling surface 19, which via a slight angle merges into an end surface 20. In figures 2A and 2B the abutment surfaces 18 and 40 are at least substantially parallel.

Near the insertion opening 50 the accommodation member 3 is provided with bearing members 22 (fourth coupling means), having a circular abutment edge 23, and smoothly contiguous thereto a straight support surface 24 which, considered in the insertion direction A, declines with respect to the centre line S2.

Referring to figures 2A, 2B, 3A, 3B the operation during a correct coupling of the coupling assembly 1 shown therein will be elucidated.

In figures 2A and 2B the tow hitch member 2 with the insertion end 7 in the insertion direction A is already inserted into the accommodation member 3, the trigger mechanism and thus the coupling head 11 in the stand-by position. The transverse pins 14 on both sides (only one side is shown), support at the location of the curves 64 on the straight support surfaces 24 of the bearing members 22, and the abutment surface 40 of the coupling head 11 has abutted the receding abutment surface 18 of the beam 17. At the upper side of the insertion member 7 at the location of the upper curve 33 the short abutment surface 34 hooked just behind the abutment surface 25 of the upper wall 42. The tow hitch rod 6 thus is in engagement with the accommodation member 3 at three locations, that means at the location of the pins 14 with support surface 24, at abutment surface 40 with abutment surface 18 and at the short abutment surface 34 with abutment surface 25.

When the user wishes to effect an actual coupling, as shown in figures 2A and 2B a tilting moment K can easily be exerted on the tow hitch member 2, for instance by pushing downward on the hitch ball 4, resulting in the abutment pins 14, as shown in figure 2B, sliding in the direction B over the support surface 24, towards the circular abutment edge 23. Due to the tilting moment K the tow hitch member 2 will rotate in direction G about the centre line of the abutment pins 14. The abutment surface 40 will slide upward in the direction P along the abutment surface 18, wherein as a result of the backward inclination thereof the coupling head 11 will be pushed in, in the direction D, counter the spring force of the compression spring 13. As a result of the tilting moment K the abutment surfaces 34 and 35 will also move upward in the direction P, wherein abutment surface 35 via the short abutment surface 34 will come to lie along the long abutment surface 25 over a larger surface. Due to the diagonal orientation of said surfaces with respect to the insertion direction A, the insertion member 7 itself will be reliably pulled further into the accommodation space 3, as if of its own accord.

The trigger mechanism is adjusted such with respect to the motion of the coupling rod 10 that when the abutment pins 14 abut the circular abutment surface 23 (as shown in figures 3A and 3B), and the coupling head 11 has arrived with nose surface 39 at the location of coupling surface 19, the trigger mechanism will have been released, so that the compression spring 13 extends the coupling rod 10 and is able to exert a pressing force T on the coupling head 11.

The transition edge of the nose surface 39 and the locking surface 38 slides from the position as shown in figures 2A and 2B in the direction Q over the coupling surface 19 by the pressure force T. Subsequently the run-on surface 37 and the coupling surface 19 (that are almost parallel then) slide over each other in direction Q, as a result of which the coupling head 11 and thus the insertion member 7 are urged further upward in the direction P. The orientation of the said surfaces is such that also the abutment surfaces 25 and 35 slide along each other. The coupling surface 19 then exerts a reaction force M on the run-on surface 37, and the wall of the bore 8 exerts a reaction force L on the convex upper side 44, as a result of which the coupling head is hinged upward in direction E while pressing in the convex upper side 44. The upper wall 41 is closer by in coupled condition, yet still spaced apart from the wall of the bore 8.

Therefore a tight, play-proof fit is achieved when the coupling rod 10 is fully extended. The insertion end 7 of the hitch member 2 is reliably clamped in the accommodation member 3, and the centre line Y of the neck 5 is oriented vertically. In this position the cooperations between the abutment pins 14 and circular bearing surface 23, the (wedge) surfaces 19 and 37, and the (wedge) surfaces 25 and 35 ensure a fixed clamping. Thus a type of three-point support is achieved. The compression spring 13 here ensures forceful maintenance of this connection.

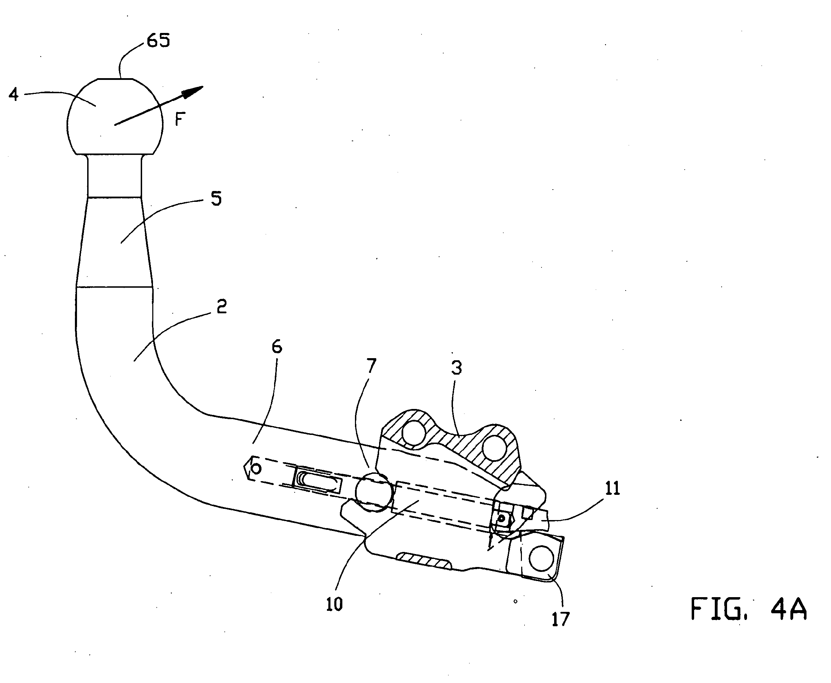

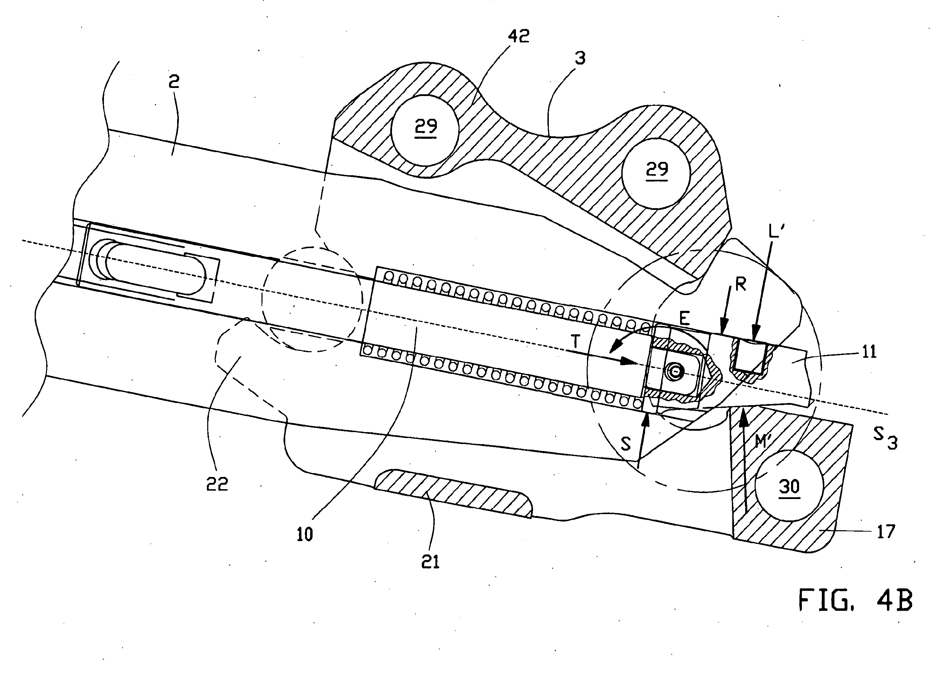

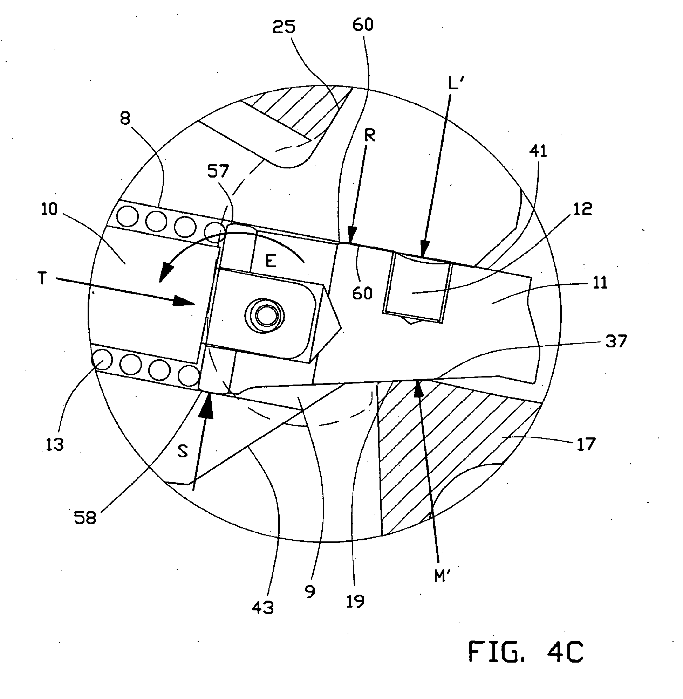

The reaction forces M, L on the coupling head 11 remain substantially the same in case of a so-called positive ball pressure, that means a force oriented downward or rearward on the ball 4. However, in case of a so-called negative ball pressure, that means in case of a force F oriented forward and/or upward as shown in figures 4A-4C, larger reaction forces M', L' are exerted on the coupling head 11, the stopping force by the compression spring 13 remaining the same. A negative ball pressure is for instance exerted by a trailer when the towing car is braking or drives over a speed ramp.

Due to the larger reaction force M' exerted by the coupling surface 19, the coupling head 11 is hinged further upward in direction E, wherein the convex upper side 44 of the insert piece 12, while exerting the increased reaction force L', is pushed in by the wall of the bore 8 to such an extent that the tilting edge 60 and subsequently the lower part 58 (second braking surface) of the slide edge 57 contact the opposite sides of the wall of the bore 8. As a result the wall exerts an extra reaction force R, and S, respectively, on the tilting edge 60 and on the lower part 58. Due to this extra braking contact with the wall it is prevented that the coupling head 11 moves back as a result of the increased reaction force M' exerted by the coupling surface 19 oriented diagonally to the centre line S3, so that the coupling remains comfortably and safely intact. In case of increase of the negative ball pressure the upper wall 41 will abut the wall of the bore 8, as a result of which plastic deformation at the location of the tilting edge 60 is counteracted.

For the desired uncoupling the operation knob 15 can be engaged and rotated in the known manner per se, in order to retract the coupling rod 10, so that the head 11 is largely retracted into the opening 9 in the bore 8. With an upward force on the tow hitch ball 4, while retracting the tow hitch member 2 in a direction opposite the direction A, the insertion member 7 can be pulled out of the accommodation member 3. Due to the angle of inclination of the coupling surfaces 19 and 37 with respect to the centre line S, the coupling head 11 remains self-releasing. Due to the stopping force, the coupling head 11 is unable to get undetachably wedged into the accommodation member 3.

The above description is included to illustrate the operation of preferred embodiments of the invention and not to limit the scope of the invention. Starting from the above explanation many variations that fall within the scope of the present invention will be evident to an expert.

## Claims

1. Coupling assembly (1) for a vehicle, comprising a first coupling member (2) provided with a connection part (4) for/towards a trailer or an accessory, and a second coupling member (3) attachable to the vehicle with which second coupling member (3) the first coupling member (2) can be detachably coupled in a coupling position for connection to the vehicle, wherein the first coupling member comprises a rod-shaped insertion end (7) having first coupling means (35) and having second coupling means (14) that are offset in insertion direction (A), and the selon coupling member (3) comprises a socket (3) having an access opening for accommodation of the insertion end (7), third coupling means (25) for cooperation with the first coupling means (23), and fourth coupling means or cooperation with the second coupling means (14), wherein the first coupling member (2) comprises a coupling rod (10) and a coupling head (11) connected to the coupling rod (10), which extend in axial direction through a longitudinal bore (8) in the insertion end (7), wherein the coupling rod (10) and the coupling head (11) are movable (T) in the axial direction with respect to the longitudinal bore up to a locking position for in the coupling position keeping the coupling means (35, 14, 25, 23) in coupling cooperation, **characterized in that** the coupling head (11) is rotatable with respect to the coupling rod (10) for rotation of a part of the coupling head situated within the longitudinal bore (8) when the coupling head is in the locking position.

2. Coupling assembly (1) according to claim 1, wherein the coupling head (11) is rotatable with respect to the coupling rod (10) about an axis of rotation (36) transverse to the axial direction.

3. Coupling assembly (1) according to claim 1 or 2, comprising a rotary hinge (52, 56) between the coupling rod (10) and the coupling read (11), wherein the rotary hinge (52, 56) has an axis of rotation (56) situated within the coupling head (11).

4. Coupling assembly (1) according to any one of the preceding claims, wherein the coupling rod (10) has an end (53) that is movably accommodated in the coupling head (11).

5. Coupling assembly (1) according to any one of the preceding claims, wherein the coupling head (11) at a first longitudinal side comprises an abutment surface (37) for in the locking position in abutment with the socket (3) exerting a stopping force on the first and/or third coupling means (35, 25), wherein the coupling head (11) preferably comprises a first braking surface (60) a second longitudinal side substantially opposite the first longitudinal side, which braking surface (60) in the axial direction towards the coupling rod (10) is offset with respect to a leading end of the abutment surface (37), and a second braking surface (58) at the first longitudinal side which in the axial direction towards the coupling rod (10) is offset with respect to the first braking surface (60), wherein the first braking surface (60) and the second braking surface (58) are positioned for in the locking position get into braking contact with opposite side wall sections of the longitudinal bore (8), wherein in the axial direction the distance between the first braking surface (60) and the second braking surface (58) preferably exceeds the distance between the first braking surface (60) and the abutment surface (37).

6. Coupling assembly (1) according to claim 5, wherein the first braking surface (60) in the axial direction is situated approximately in the middle of the coupling head (11).

7. Coupling assembly (1) according to claim 5 or 6, wherein the first braking surface (60) is situated on a locally elevated section of the second longitudinal side.

8. Coupling assembly (1) according to any one of the claims 5-7, wherein the first braking surface (60) is situated on or adjacent to a transition from the second longitudinal side to a tapering end section of the coupling head (11).

9. Coupling assembly (1) according to any one of the claims 5-8, wherein the coupling head (11) comprises a spring element (12) adjacent to or at a short distance from the first braking surface (60), wherein the spring element (12) in the locking position with a free end (44) abuts the longitudinal bore (8) in a pre-biassed manner, wherein preferably the free end in unloaded condition of the spring element (12) transverse to the axial direction projects above the first braking surface (60).

10. Coupling assembly (1) according to claim 9, wherein the free end (44) of the spring element (12) is positioned transverse to the axial direction substantially opposite the abutment surface (37).

11. Coupling assembly (1) according to claim 9 or 10, wherein the spring element (12) is accommodated in a recess (61), preferably a blind hole, in the second longitudinal side.

12. Coupling assembly (1) according to any one of the claims 5-11, wherein the second braking surface (58) is situated at a rear side of the coupling head (11) that is situated near the coupling rod (10).

13. Coupling assembly (1) according to any one of the preceding claims, wherein the coupling head (11) at rear side situated near the coupling rod (10) is provided with a slide surface (57, 58) preferably extending radially around the coupling head (11), wherein the rear side preferably defines the widest portion of the coupling head (11), and/or wherein the second braking surface (58) is defined on the slide surface (57,58).

14. Coupling assembly (1) according to any one of the claims 5-13, wherein the first and/or second braking surface (60,58) has a convex shape in the axial direction.

15. Coupling assembly (1) according to any one of the claims 5-14, wherein the coupling head (11) at the first longitudinal side comprises a third braking surface that is substantially straight in the axial direction and which in the locking position abuts the longitudinal bore (8) while the second braking surtace (58) exerts a local peak pressure contact.

16. Coupling assembly (1) according to any one of the claims 5-15, wherein the coupling head (11) at the second longitudinal side comprises a fourth braking surface (41) that is substantially straight in the axial direction and which in the locking position abuts the longitudinal bore (8) while the first braking surface (60) exerts a local peak pressure contact.

17. Coupling assembly (1) according to any one of the claims 5-16, wherein the abutment surface (37) in the locking position substantially faces away from the first coupling means (35).

18. Coupling assembly (1) according to any one of the claims 5-17, wherein the abutment surface (37) is oriented inclined to the axial direction of the coupling head (11).

19. Coupling assembly (1) according to any one of the preceding claims, wherein the second and fourth coupling means (14,23) are formed for together providing a slide bearing and/or rotation bearing over an insertion path of the first coupling member (2).

20. Coupling assembly (1) according to any one of the preceding claims, wherein the coupling assembly (1), particularly the coupling head (11) is made of metal, preferably hardened steel.

## Patentansprüche

1. Kupplungsbaugruppe (1) für ein Fahrzeug, umfassend ein erstes Kupplungselement (2), bei dem ein Verbindungsstück (4) für/zu einem Anhänger oder einem Zubehörteil vorgesehen ist, und ein zweites mit dem Fahrzeug verbindbares Kupplungselement (3), wobei das erste Kupplungselement (2) lösbar mit dem zweiten Kupplungselement (3) in einer Kupplungsposition zur Verbindung mit dem Fahrzeug gekuppelt werden kann, wobei das erste Kupplungselement ein stangenförmiges Einsatzende (7) umfasst, das erste Kupplungsmittel (35) und zweite Kupplungsmittel (14) aufweist, die in Einsetzrichtung (A) versetzt sind, und das zweite Kupplungselement (3) eine Buchse (3), die eine Zugangsöffnung zur Aufnahme des Einsatzendes (7) aufweist, dritte Kupplungsmittel (25) zum Zusammenwirken mit den ersten Kupplungsmitteln (35) und vierte Kupplungsmittel (23) zum Zusammenwirken mit den zweiten Kupplungsmitteln (14) umfasst, wobei das erste Kupplungselement (2) eine Kupplungsstange (10) und einen mit der Kupplungsstange (10) verbundenen Kupplungskopf (11) umfasst, die sich in axialer Richtung durch eine Längsbohrung (8) in dem Einsatzende (7) erstrecken, wobei die Kupplungsstange (10) und der Kupplungskopf (11) bis zu einer Verriegelungsposition in axialer Richtung in Bezug auf die Längsbohrung beweglich (T) sind, um die Kupplungsmittel (35, 14, 25, 23) in der Kupplungsposition in Kupplungseingriff zu halten, **dadurch gekennzeichnet, dass** der Kupplungskopf (11) zum Drehen eines Teils des Kupplungskopfs, der sich innerhalb der Längsbohrung (8) befindet, wenn sich der Kupplungskopf in der Verriegelungsposition befindet, in Bezug auf die Kupplungsstange (10) drehbar ist.

2. Kupplungsbaugruppe (1) nach Anspruch 1, wobei der Kupplungskopf (11) in Bezug auf die Kupplungsstange (10) um eine Drehachse (56) quer zur axialen Richtung drehbar ist.

3. Kupplungsbaugruppe (1) nach Anspruch 1 oder 2, umfassend ein Drehscharnier (52, 56) zwischen der Kupplungsstange (10) und dem Kupplungskopf (11), wobei das Drehscharnier (52, 56) vorzugsweise eine Drehachse (56) aufweist, die innerhalb des Kupplungskopfs (11) angeordnet ist.

4. Kupplungsbaugruppe (1) nach einem der vorhergehenden Ansprüche, wobei die Kupplungsstange (10) ein Ende (53) aufweist, das beweglich in dem Kupplungskopf (11) aufgenommen wird.

5. Kupplungsbaugruppe (1) nach einem der vorhergehenden Ansprüche, wobei der Kupplungskopf (11) an einer ersten Längsseite eine Anlagefläche (37) umfasst, um in der Verriegelungsposition in Anlage an die Buchse (3) eine hemmende Kraft auf die ersten und/oder dritten Kupplungsmittel (35, 25) auszuüben, wobei der Kupplungskopfs (11) vorzugsweise eine erste Bremsfläche (60) an einer zweiten Längsseite im Wesentlichen gegenüberliegend der ersten Längsseite, wobei die Bremsfläche (60) in Bezug auf ein Vorderende der Anlagefläche (37) in axialer Richtung zur Kupplungsstange (10) versetzt ist, und eine zweite Bremsfläche (58) an der ersten Längsseite, die in Bezug auf die erste Bremsfläche (60) in axialer Richtung zur Kupplungsstange (10) versetzt ist, umfasst, wobei die erste Bremsfläche (60) und die zweite Bremsfläche (58) angeordnet sind, um in der Verriegelungsposition in Bremskontakt mit den gegenüberliegenden Seitenwandabschnitten der Längsbohrung (8) zu kommen, wobei in axialer Richtung der Abstand zwischen der ersten Bremsfläche (60) und der zweiten Bremsfläche (58) vorzugsweise den Abstand zwischen der ersten Bremsfläche (60) und der Anlagefläche (37) übersteigt.

6. Kupplungsbaugruppe (1) nach Anspruch 5, wobei die erste Bremsfläche (60) in axialer Richtung ungefähr in der Mitte des Kupplungskopfs (11) angeordnet ist.

7. Kupplungsbaugruppe (1) nach Anspruch 5 oder 6, wobei die erste Bremsfläche (60) an einem lokal erhöhten Abschnitt der zweiten Längsseite angeordnet ist.

8. Kupplungsbaugruppe (1) nach einem der Ansprüche 5 - 7, wobei die erste Bremsfläche (60) an einem oder angrenzend an einen Übergang von der zweiten Längsseite zu einem sich verjüngenden Endabschnitt des Kupplungskopfs (11) angeordnet ist.

9. Kupplungsbaugruppe (1) nach einem der Ansprüche 5 - 8, wobei der Kupplungskopf (11) ein Federelement (12) angrenzend an oder in einem kurzen Abstand von der ersten Bremsfläche (60) umfasst, wobei das Federelement (12) in der Verriegelungsposition mit einem freien Ende (44) an der Längsbohrung (8) auf vorgespannte Weise anliegt, wobei vorzugsweise das freie Ende (44) in unbelastetem Zustand des Federelements (12) quer zur axialen Richtung über der ersten Bremsfläche (60) hervorsteht.

10. Kupplungsbaugruppe (1) nach Anspruch 9, wobei das freie Ende (44) des Federelements (12) quer zur axialen Richtung im Wesentlichen gegenüberliegend der Anlagefläche (37) angeordnet ist.

11. Kupplungsbaugruppe (1) nach Anspruch 9 oder 10, wobei das Federelement (12) in einer Aussparung (61), vorzugsweise einem Blindloch, in der zweiten Längsseite aufgenommen wird.

12. Kupplungsbaugruppe (1) nach einem der Ansprüche 5 - 11, wobei die zweite Bremsfläche (58) an einer Hinterseite des Kupplungskopfs (11), die bei der Kupplungsstange (10) angeordnet ist, angeordnet ist.

13. Kupplungsbaugruppe (1) nach einem der vorhergehenden Ansprüche, wobei an einer Hinterseite des Kupplungskopfes (11), die bei der Kupplungsstange (10) angeordnet ist, eine Gleitfläche (57, 58) vorgesehen ist, die sich vorzugsweise radial um den Kupplungskopf (11) erstreckt, wobei die Hinterseite vorzugsweise den breitesten Abschnitt des Kupplungskopfs (11) darstellt und/oder wobei die zweite Bremsfläche (58) auf der Gleitfläche (57, 58) bestimmt ist.

14. Kupplungsbaugruppe (1) nach einem der Ansprüche 5 - 13, wobei die erste und/oder zweite Bremsfläche (60, 58) in axialer Richtung eine konvexe Form aufweist.

15. Kupplungsbaugruppe (1) nach einem der Ansprüche 5 - 14, wobei der Kupplungskopf (11) an der ersten Längsseite eine dritte Bremsfläche umfasst, die in axialer Richtung im Wesentlichen gerade ist, und die in der Verriegelungsposition an der Längsbohrung (8) anliegt, während die zweite Bremsfläche (58) einen lokalen Spitzendruckkontakt ausübt.

16. Kupplungsbaugruppe (1) nach einem der Ansprüche 5 - 15, wobei der Kupplungskopf (11) an der zweiten Längsseite eine vierte Bremsfläche (41) umfasst, die in axialer Richtung im Wesentlichen gerade ist, und die in der Verriegelungsposition an der Längsbohrung (8) anliegt, während die erste Bremsfläche (60) einen lokalen Spitzendruckkontakt ausübt.

17. Kupplungsbaugruppe (1) nach einem der Ansprüche 5 - 16, wobei die Anlagefläche (37) in der Verriegelungsposition im Wesentlichen von den ersten Kupplungsmitteln (35) abgewandt angeordnet ist.

18. Kupplungsbaugruppe (1) nach einem der Ansprüche 5 - 17, wobei die Anlagefläche (37) geneigt zur axialen Richtung des Kupplungskopfs (11) angeordnet ist.

19. Kupplungsbaugruppe (1) nach einem der vorhergehenden Ansprüche, wobei die zweiten und vierten Kupplungsmittel (14, 23) ausgebildet sind, um zusammen ein Gleitlager und/oder Drehlager entlang eines Einsetzpfads des ersten Kupplungselements (2) bereitzustellen.

20. Kupplungsbaugruppe (1) nach einem der vorhergehenden Ansprüche, wobei die Kupplungsbaugruppe (1), insbesondere der Kupplungskopf (11), aus Metall, vorzugsweise aus gehärtetem Stahl, hergestellt ist.

## Revendications

1. Ensemble (1) d'accouplement pour un véhicule, comprenant un premier élément (2) d'accouplement doté d'une partie (4) de raccordement pour/à une remorque ou un accessoire, et un deuxième élément (3) d'accouplement pouvant être fixé au véhicule, deuxième élément (3) d'accouplement avec lequel le premier élément (2) d'accouplement peut s'accoupler de façon amovible dans une position d'accouplement pour le raccordement au véhicule, dans lequel le premier élément d'accouplement comprend une extrémité (7) d'insertion en forme de tige ayant des premiers moyens (35) d'accouplement et ayant des deuxièmes moyens (14) d'accouplement qui sont décalés dans une direction d'insertion (A), et le deuxième élément (3) d'accouplement comprend une douille (3) ayant une ouverture d'accès pour loger l'extrémité (7) d'insertion, des troisièmes moyens (25) d'accouplement coopérant avec les premiers moyens (35) d'accouplement, et des quatrièmes moyens (23) d'accouplement coopérant avec les deuxièmes moyens (14) d'accouplement, dans lequel le premier élément (2) d'accouplement comprend une tige (10) d'accouplement et une tête (11) d'accouplement reliée à la tige (10) d'accouplement, qui s'étendent dans une direction axiale à travers un alésage (8) longitudinal dans l'extrémité (7) d'insertion, dans lequel la tige (10) d'accouplement et la tête (11) d'accouplement sont mobiles (T) dans la direction axiale par rapport à l'alésage longitudinal jusqu'à une position de verrouillage pour garder, dans la position d'accouplement, les moyens d'accouplement (35, 14, 25, 23) en coopération d'accouplement, **caractérisé en ce que** la tête (11) d'accouplement est rotative par rapport à la tige (10) d'accouplement pour faire tourner une partie de la tête d'accouplement située dans l'alésage (8) longitudinal lorsque la tête d'accouplement se trouve dans la position de verrouillage.

2. Ensemble (1) d'accouplement selon la revendication 1, dans lequel la tête (11) d'accouplement est rotative par rapport à la tige (10) d'accouplement autour d'un axe de rotation (56) transversal à la direction axiale.

3. Ensemble (1) d'accouplement selon la revendication 1 ou 2, comprenant une charnière (52, 56) rotative entre la tige (10) d'accouplement et la tête (11) d'accouplement, dans lequel la charnière (52, 56) rotative a de préférence un axe de rotation (56) situé dans la tête (11) d'accouplement.

4. Ensemble (1) d'accouplement selon l'une quelconque des revendications précédentes, dans lequel la tige (10) d'accouplement a une extrémité (53) qui est reçue de façon mobile dans la tête (11) d'accouplement.

5. Ensemble (1) d'accouplement selon l'une quelconque des revendications précédentes, dans lequel la tête (11) d'accouplement au niveau d'un premier côté longitudinal comprend une surface (37) de butée pour exercer, dans la position de verrouillage en butée contre la douille (3), une force d'arrêt sur les premiers et/ou les troisièmes moyens (35, 25) d'accouplement, dans lequel la tête (11) d'accouplement comprend de préférence une première surface (60) de freinage au niveau d'un deuxième côté longitudinal essentiellement opposé au premier côté longitudinal, laquelle surface (60) de freinage dans la direction axiale vers la tige (10) d'accouplement est décalée par rapport à une extrémité d'attaque de la surface (37) de butée, et une deuxième surface (58) de freinage au niveau du premier côté longitudinal qui, dans la direction axiale vers la tige (10) d'accouplement, est décalée par rapport à la première surface (60) de freinage, dans lequel la première surface (60) de freinage et la deuxième surface (58) de freinage sont positionnées pour qu'elles se placent en contact de freinage, dans la position de verrouillage, avec des tronçons de parois latérales opposés de l'alésage (8) longitudinal, dans lequel dans la direction axiale la distance entre la première surface (60) de freinage et la deuxième surface (58) de freinage dépasse de préférence la distance entre la première surface (60) de freinage et la surface (37) de butée.

6. Ensemble (1) d'accouplement selon la revendication 5, dans lequel la première surface (60) de freinage dans la direction axiale est située approximativement au milieu de la tête (11) d'accouplement.

7. Ensemble (1) d'accouplement selon la revendication 5 ou 6, dans lequel la première surface (60) de freinage est située sur un tronçon localement en élévation du deuxième côté longitudinal.

8. Ensemble (1) d'accouplement selon l'une quelconque des revendications 5 à 7, dans lequel la première surface (60) de freinage est située sur ou adjacente à une transition du deuxième côté longitudinal à un tronçon d'extrémité conique de la tête (11) d'accouplement.

9. Ensemble (1) d'accouplement selon l'une quelconque des revendications 5 à 8, dans lequel la tête (11) d'accouplement comprend un élément (12) formant ressort adjacent à ou à une courte distance de la première surface (60) de freinage, où l'élément (12) formant ressort dans la position de verrouillage avec une extrémité (44) libre (44) bute contre l'alésage (8) longitudinal en étant pré-tensionné, dans lequel de préférence l'extrémité (44) libre dans une condition non contrainte de l'élément (12) formant ressort transversale à la direction axiale se projette au-dessus la première surface (60) de freinage.

10. Ensemble (1) d'accouplement selon la revendication 9, dans lequel l'extrémité (44) libre de l'élément (12) formant ressort est positionnée de manière transversale à la direction axiale essentiellement opposée à la surface (37) de butée.

11. Ensemble (1) d'accouplement selon la revendication 9 ou 10, dans lequel l'élément (12) formant ressort est logé dans un évidement (61), de préférence un trou borgne, dans le deuxième côté longitudinal.

12. Ensemble (1) d'accouplement selon l'une quelconque des revendications 5 à 11, dans lequel la deuxième surface (58) de freinage est située au niveau d'un côté arrière de la tête (11) d'accouplement qui est située à proximité de la tige (10) d'accouplement.

13. Ensemble (1) d'accouplement selon l'une quelconque des revendications précédentes, dans lequel la tête (11) d'accouplement au niveau d'un côté arrière situé à proximité de la tige (10) d'accouplement est dotée d'une surface (57, 58) de coulissement s'étendant de préférence radialement autour de la tête (11) d'accouplement, dans lequel le côté arrière définit de préférence la partie la plus large de la tête (11) d'accouplement, et/ou dans lequel la deuxième surface (58) de freinage est définie sur la surface (57, 58) de coulissement.

14. Ensemble (1) d'accouplement selon l'une quelconque des revendications 5 à 13, dans lequel la première et/ou la deuxième surface (60, 58) de freinage a une forme convexe dans la direction axiale.

15. Ensemble (1) d'accouplement selon l'une quelconque des revendications 5 à 14, dans lequel la tête (11) d'accouplement au niveau du premier côté longitudinal comprend une troisième surface de freinage qui est essentiellement droite dans la direction axiale et qui, dans la position de verrouillage, bute contre l'alésage (8) longitudinal tandis que la deuxième surface (58) de freinage exerce un contact local avec pointe de pression.

16. Ensemble (1) d'accouplement selon l'une quelconque des revendications 5 à 15, dans lequel la tête (11) d'accouplement au niveau du deuxième côté longitudinal comprend une quatrième surface (41) de freinage qui est essentiellement droite dans la direction axiale et qui, dans la position de verrouillage, bute contre l'alésage (8) longitudinal tandis que la première surface (60) de freinage exerce un contact local avec pointe de pression.

17. Ensemble (1) d'accouplement selon l'une quelconque des revendications 5 à 16, dans lequel la surface (37) de butée dans la position de verrouillage est essentiellement dos aux premiers moyens (35) d'accouplement.

18. Ensemble (1) d'accouplement selon l'une quelconque des revendications 5 à 17, dans lequel la surface (37) de butée est orientée de manière inclinée par rapport à la direction axiale de la tête (11) d'accouplement.

19. Ensemble (1) d'accouplement selon l'une quelconque des revendications précédentes, dans lequel les deuxièmes et les quatrièmes moyens (14, 23) d'accouplement sont formés pour fournir ensemble un palier de glissement et/ou un palier de rotation sur un chemin d'insertion du premier élément (2) d'accouplement.

20. Ensemble (1) d'accouplement selon l'une quelconque des revendications précédentes, dans lequel l'ensemble (1) d'accouplement, en particulier la tête (11) d'accouplement, est réalisé en métal, de préférence en acier durci.
